# EUROPEAN PATENT APPLICATION

(11) **EP 3 890 264 A1**
(43) Date of publication of application: **06.10.2021**
(21) Application number: 20382255.6
(22) Date of filing: 31.03.2020
(51) Int. Cl.: H04L 29/06, G06Q 10/10, G06Q 50/18, H04L 12/58

(54) **METHOD FOR AUTOMATED CERTIFICATION OF CONFIDENTIAL INFORMATION**

(71) Applicant: Lleidanetworks Serveis Telemàtics, S.A., 25003 Lleida (ES)
(72) Inventor: SAPENA, FRANCISCO, 25003 LLEIDA (ES)

(57) **Abstract**

The object of the invention enables the declaration, deposit and certified notification of any type of material subject to intellectual property rights to thus demonstrate reliably and through a telecommunications operator, which acts as a digital witness of the entire operation, that a material was deposited, that it was notified to the destination and that this destination accessed this material declared confidential. The telecommunications operator generates a document proof of the entire process and circumstances, it is signed electronically and it serves as proof to demonstrate the creation and dissemination history of any type of material that may be subject to intellectual property rights.

## Description

### OBJECT OF THE INVENTION

The object of the invention falls within the technical field of telecommunications.

More specifically, the object of the invention is aimed at the digital certification of documents with information that may be sensitive, as well as events related to the transmission and deposit thereof.

### BACKGROUND OF THE INVENTION

Nowadays, development occurs at a tremendous pace due to the use of new technologies and the ability to telework which enable us to develop multiple versions of developments or research that we are carrying out, in addition to enabling us to share it quickly and often through email.

This enables to advance more quickly, nevertheless the way to deposit and generate proof of all of this is currently based on absolutely analogue and archaic methods, which require the presence of notaries who attest to the content, physically deposit it and can be consulted later.

The long-term trend in the market is to give greater legal certainty and speed to the creator of content, developments and research and, in turn, to the recipient of that information, who will be the receiver of the message with a link that gives access to the same. It is necessary for the process to be fully automated through an intermediary such as a telecommunications operator which acts as a digital witness when receiving the information, safeguarding it, declaring it confidential and forwarding it to the recipient, generating documents of electronic proof of all of this.

For example, document KR20130102675A describes a biometric authentication-based method for preventing industrial technology leakage in a surveillance system to reduce the cost required for authentication by calculating the digest of a packet for authentication. The described method is based on how an industrial secret is transmitted through a network in such a way that each transmitted packet is authenticated in real time, while the packets containing the industrial secret are blocked by the authentication. The user's biometric information is entered into a transmission control protocol / Internet protocol (TCP / IP) stack having a surveillance system implemented to prevent information leakage through the network.

Similarly, this problem is addressed in US20060111991A1 wherein a confidential information sharing system is described which includes a first plurality of data collection units, each collecting confidential data regarding a second plurality of individual entities, a third plurality of data consumer units intermittently requiring confidential data collected by one of the first plurality of data collection units regarding ones of the second plurality of individual entities; and at least one confidential data sharing interface responding to a requirement of one of the third plurality of data consumer units for confidential data from one of the first plurality of data collection units regarding one of the second plurality of individual entities, to extract confidential data from an appropriate one of the first plurality of data collection units regarding a specific individual entity.

The invention object of this application provides a solution to the aforementioned drawbacks by automating the entire process, facilitating the process of determining and safeguarding sensitive information and generating a signed digital certificate with proof of the entire process and the participants.

### DESCRIPTION OF THE INVENTION

The object of the invention herein described offers a solution to the previously described problems by providing a certificate of proof that is digitally signed by the telecommunications operator which acts as a digital witness that enables the demonstration that both the content of a document and the specific date on which it is sent was digitally deposited, being declared confidential and forwarded to the destination, finally being able to be actively delivered to the destination for the recipient, which requires the recipient's action, then accessing the content of the document through a link provided.

The object of the invention is aimed in its basic implementation at a method for certifying information considered sensitive and understood to be confidential in nature, wherein a telecommunications operator or an electronic communications provider (e-delivery provider) receives, stores, safeguards, reroutes, delivers and certifies information considered confidential, with or without a recognised electronic signature, from any sending user, preferably the operator's customer, to one or more recipients who preferably are not non-customers of the operator or of the electronic communications provider, generating proof of all the transactions of the operation to finally generate a document of proof as a telecommunications operator or electronic communications (e-delivery) provider, acting as a digital witness, custodian and depositary of said confidential information, delivering the aforementioned document with the proof to sending users as a trusted third party with at least part of the material and/or data deposited by the sender, the declaration as confidential with the insertion of a mark that defines the confidential status of the information managed, the sending date and time, the full text sent by mail, the date and time of delivery of the mail, the form of access and display and identification of the receiving entity and/or the final circumstances in the event of non-delivery or delay in delivery to the non-customer recipient.

As previously described, the object of the invention can be implemented by means of a platform configured to conduct the method to carry out the declaration, deposit and automated sending of confidential information, with or without a recognised electronic signature, in such a way that at least the sender of a message comprising said information considered confidential receives a certificate or document of proof stating that content was sent, deposited with the telecommunications operator, declared confidential by means of a mark or any other express indication of deposit and/or confidentiality, thus becoming confidential information, and sent to the destination in a certified manner by an email containing a link to the content; as well as the dates and times when each operation or transaction was carried out, which may also be accompanied by corresponding time stamps. If the recipient accesses this link, they will be able to access the content deposited and declared confidential, i.e., the confidential information, generating a certificate or document of proof with all the steps carried out, the content of the confidential information deposited and delivered, where appropriate, and including a unique transaction number, the dates, times of at least the event related to the deposit of the content and finally the delivery times where appropriate. Likewise, events related to accessing the link, forwarding the message, downloading confidential information and any other data related to accessing said confidential information are collected, recorded and certified.

The method for the declaration, deposit and automated sending of confidential information certified by a telecommunications operator or electronic communications provider object of the invention is characterised by using a platform that is implemented by a telecommunications operator using a series of interconnected servers. In this way, the platform can have a configuration that implements:
- A server that implements a user management system, declaration and deposit of the material to be sent (Incoming server).
- An email management server with collection of proof (Mailcert Server).
- A certification database server.
- An electronic device with communication capability such as a sending entity's computer or smartphone.
- An electronic device with communication capability such as the receiving entity's computer or smartphone.
- A database server that stores the content of the original mail and the deposited content (Deposit server).
- At least one-time stamp server (TSU Server).
- A proof generating server for proof collected during the contracting process (TSA Server).
- A sender's mail server.
- A recipient's mail server.
- A generated document server intended to store the certificates of deposit and certified sending generated during the transactions.

It should be noted that since the platform is linked to a telecommunications operator (or communications operator throughout this document), and preferably implemented therein, it can enable certification tasks to be carried out without the need for network entities external to the communications operator.

In a preferred embodiment of the aspect of the invention aimed at the method for the declaration, deposit and automated certified sending of confidential information using a telecommunications operator or electronic communications provider, it must be well defined by:
i. Access by a sending user,
ii. Sending an email from the sender to the incoming server of the telecommunications operator,
iii. Marking the file corresponding to parts of the mail and/or content as sensitive information to confidential information,
iv. Depositing the email and its content already marked as confidential in a deposit server for its storage, management and possible data extraction of the content stored therein (e.g., mail address, name, etc),
v. Determining the way in which confidential information will be accessed by a recipient,
vi. Creating an email message with an access link to the deposit server where the confidential information is located,
vii. Receiving the aforementioned email message by the recipient,
viii. Accessing the link by at least one recipient, and recording the same,
ix. Identifying the recipient, and recording the same,
x. Accessing confidential information by the recipient,
xi. Displaying the confidential information already marked as such to the recipient,
xii. Generating a document of proof with the data of at least one of the following elements: the information of the depositary or sender, the information of the destination or recipient, the recipient authentication method, the content of the deposited material to which a mark that identifies it as confidential can be added, the mail generated with the link, data referring to the transactions associated with the transmission of the mail:
   a. Who deposited it, i.e., the sender's data?
   b. To whom has it been sent, i.e., the recipient's data?
   c. When was it deposited, i.e., when was sensitive information received in a Deposit server?
   d. When was the message sent?
   e. When was it delivered to the destination server?
   f. When was the link accessed?
   g. Who accessed the link?
   h. Data referring to the identification of the recipient and, if required, also of the sender. If a digital certificate is used, with which digital certificate did they identify themselves?
   i. Data referring to the access to confidential information, i.e., when was the information accessed and its content viewed? If this happened, when did it occur? Additionally, data related to forwarding or downloading sensitive information can be obtained.
   j. This document of proof is preferably signed electronically with the digital signature of the telecommunications operator and the step of adding a time stamp can subsequently be taken. Once signed and stamped, the document of proof becomes a digital certificate of which respective copies are sent to at least one of: sender and recipient.

By way of summary, and for a better understanding of this aspect of the object of the invention, a possible embodiment of this is described below by way of a non-limiting example thereof in which the method comprises the following steps:
- Access by a user, preferably registered previously, to the incoming server responsible for managing users and it enables them to deposit documents for their subsequent management and certified sending.
- The incoming server verifies that they are registered and that they have credit to be able to deposit and send the documentation. The verification process may be by means of a username/password or by means of a recognised digital certificate.
- The incoming server will instruct the sender to choose the identification method to be used by the recipient, if there is only access, if there is conditional access by password or similar, or if there is access by submitting a digital certificate.
- Next, the material to be deposited, which may be considered as confidential and which is given by a digital object or file such as, for example, photos, PDFs, docs, etc., is sent to the incoming server. This material can be stored in a deposited material database server, although it is necessary to subsequently create a document of proof that will eventually be generated.
- Once deposited, the sender is asked to indicate the email address and mobile number of the recipient, when relevant, in case it is necessary to send them a temporary password (OTP) to access the link, and therefore the associated content, if the sending entity considers it appropriate.
- Next, it is sent to the Mailcert Server, which is an email management server with collection of proof so that the email is generated with the link to access the content. Once the email has been sent, three situations may arise:
   Preferably, if the mail cannot be delivered due to the absence of the server or the recipient/receiver or any other circumstance that prevents delivery in a time determined by the configuration of the system. In this case, the TSA server, which is a proof generating server of proof collected during the contracting process with the possibility of generating time stamps, will compose the file of proof first with the deposited material, with the date and time of deposit and the material deposited. Subsequently, it adds all the proof of the attempts to deliver the certified mail, a watermark is added that indicates the confidentiality of the deposited material, and finally it is signed electronically by the telecommunications operator and a time stamp is added through a time stamp server, either internal or external to the telecommunications provider. The final result is a signed and stamped file containing all the proof and content of the actions carried out, with watermarks that indicate its confidentiality and including who, for whom, when it was deposited, when it was sent and when it could not be delivered. This file is sent by email through the Mailcert Server that is delivered to the sender, preferably through the sender's electronic representative, which is their mail server on the network in any of the possible embodiments), and from there, finally to the sender who receives the certificate with all the proof.

### DESCRIPTION OF THE DRAWINGS

In order to complement the description being made and with the object of helping to better understand the features of the invention, in accordance with a preferred practical exemplary embodiment thereof, said description is accompanied, as an integral part thereof, by a set of drawings where, in an illustrative and non-limiting manner, the following has been represented:
Figure 1 shows a flow chart of a preferred exemplary embodiment of the method object of the invention.
Figure 2 shows a flow chart of an exemplary embodiment of the method object of the invention in a situation in which the mail cannot be delivered to its receiving server due to the absence of either the server or the user, generating proof of the entire process.
Figure 3 shows a flow chart of an exemplary embodiment of the method object of the invention in a situation in which the mail is delivered, but finally the deposited content is not accessed after a certain time, generating proof of the entire process.
Figure 4 shows a flow chart of an exemplary embodiment of the method object of the invention in a situation in which the mail is delivered and the content is accessed, also generating proof of the entire process.

### PREFERRED EMBODIMENT OF THE INVENTION

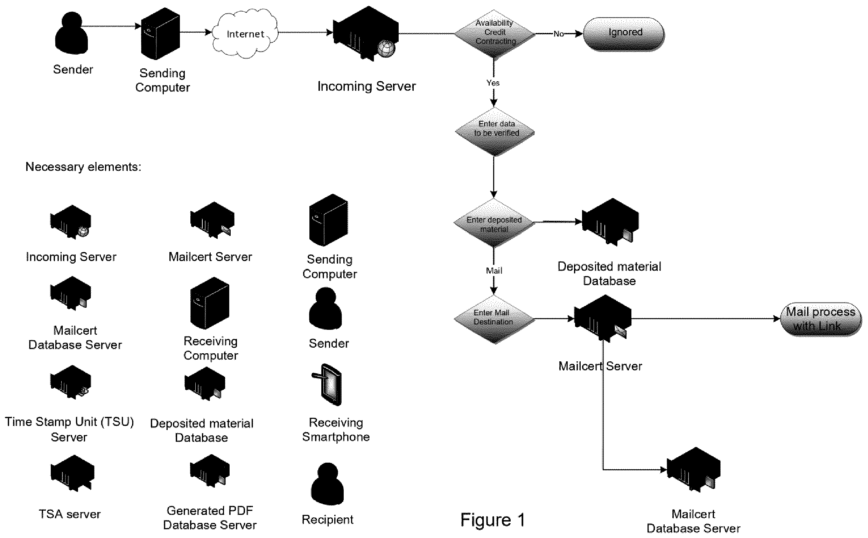

In view of Figure 1 wherein a chart referring to a possible embodiment of the method object of the invention is represented, it is necessary that a sender, preferably a customer of a telecommunications operator, wishes to deposit and send any information (an analysis, a research result, tables, master formulas, etc.; in short, something that intends to claim intellectual property rights at a later date), certifying the confidentiality of said information, as well as all the data related to the transmission of said information. For this, the sender accesses the deposit server that the telecommunication provider (not shown in the figures) which is configured to be the one carrying out the registration, control, access and deposits of the users.

First, it is checked that the sender is registered and has credit to carry out the operation. Once verified, the sender is asked how they want to identify a recipient of the information, this identification can be without any type of password, with a temporary OTP password or with a specific recognised electronic certificate; additionally, it is possible to determine the time interval for delivery and display, i.e., how long one can access the link sent in the mail which enables a confidential data server of the telecommunications operator to be accessed.

Later, the sender is asked to transmit the material they wish to deposit and certify, sending a digital file that may contain attachments to the incoming server of the telecommunications operator. Then the sender is asked for the email address of the recipient or destination user; additionally the phone number of the same can be requested, wherein the OTP would eventually be sent if it has been the indicated authentication method and the data contained in the recognised digital certificate to authenticate it, if this is the method used.

Next, a certified email is generated for the recipient, which contains the access link to the deposited content and it is sent to the Mailcert Server, which is the server that will deliver it and generate the proof of the transactions related to the emails.

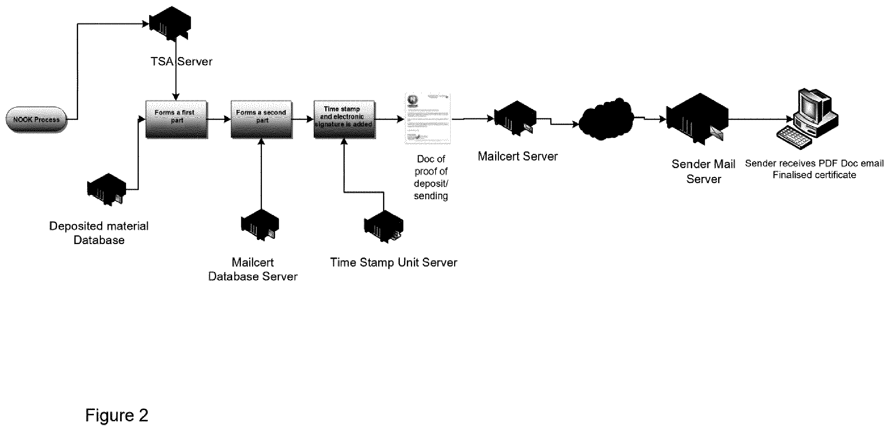

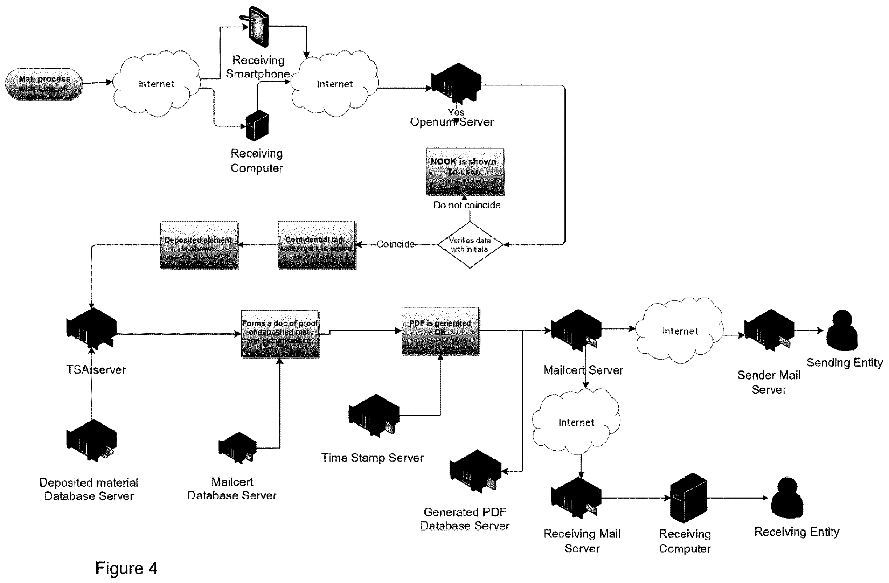

The email delivery process can go through three scenarios or situations, respectively described in Figure 2, Figure 3 and Figure 4, the most common being the process described in Figure 4.

The process described in Figure 2 is the process in which the mail cannot be delivered to the destination, either because the address does not exist or because the destination server does not accept it or for any other reason. In this case, it is passed to a TSA server or time proof generator that will compose a document of proof with at least one of the following elements: the depositary or sender information, the destination or recipient information, the destination authentication method, the content of the deposited material to which a mark that identifies it as confidential can be added, the mail generated with the link, the circumstances of non-delivery of the mail and the document of proof with data of the circumstances and the material will be signed with a recognised electronic signature. Subsequently, a time stamp is added to identify the date and time of the entire process, generating a certificate that will then be sent to the Mailcert Server that will deliver this certificate to the sender.

With this certificate, the sender can demonstrate, in a certified manner, via a telecommunications operator that the deposited material or information, declared as confidential, that a notification was sent to the destination user and it could not be delivered.

In the case in which the mail sent from the Mailcert Server is delivered to the destination, but the recipient ignores it and does not access the link or is not properly authenticated when they access it due to any circumstance and they exceed an expiration time established by the sending user. The method of the invention passes to the TSA server the document of proof with at least one of the following elements: the depositary or sender information, the destination or recipient information, the recipient authentication method, the content of the deposited material to which a mark that identifies it as confidential can be added, the mail generated with the link, data referring to the circumstances of non-delivery of the mail and the document of proof with all the circumstances and the material will be signed with a recognised electronic signature. Subsequently, a time stamp can be added to identify the date and time of the entire final process and then it will be sent as mail to the Mailcert Server that will deliver this document of proof to the sending user.

With this certificate, the sender can demonstrate in a certified manner via a telecommunications operator that the deposited material or information, declared it confidential, notification was sent to the recipient along with the access link to said material and the destination user or recipient did not access that deposited material declared confidential.

In a yet alternative embodiment of the object of the invention, the mail is delivered to the recipient and this recipient accesses it appropriately, in due time and form established by the sending user. As in any of the embodiments of the object of the invention, when the recipient accesses the destination of the link, the content of the deposited material is then shown with the watermark that identifies it as confidential, letting the recipient access a posteriori as many times or for as much time as provided by the sending user.

Once the content of the material deposited by the sender is shown, it is passed to the TSA server that composes the document of proof with the information of the sender that, as it is contained in this document, acts as the depositary of the material or confidential or sensitive information, the information referring to the identification of the recipient, the recipient authentication method if so chosen, the content of the deposited material to which a mark that identifies it as confidential is optionally added, the mail generated with the link, the temporary circumstances of access, the form of access and the access addresses to the destination of the link and therefore to the content. Then the file is signed with a recognised electronic signature with all the circumstances and the material. Subsequently, a time stamp can be added to identify the moment, both in date and time, of the entire final process and then send it as mail to the Mailcert Server that will deliver this document of proof by certified email to the sender and optionally the same can be done for the recipient or receiver.

With the certificates finally generated in this scenario, the sender can demonstrate in a certified manner via a telecommunications operator that it deposited a material, declared it confidential, notification was sent to the destination recipient and this destination recipient accessed that deposited material declared confidential, wherein the entire process may be qualified as EIDAS in the event that the recipient is identified by means of a recognised digital certificate.

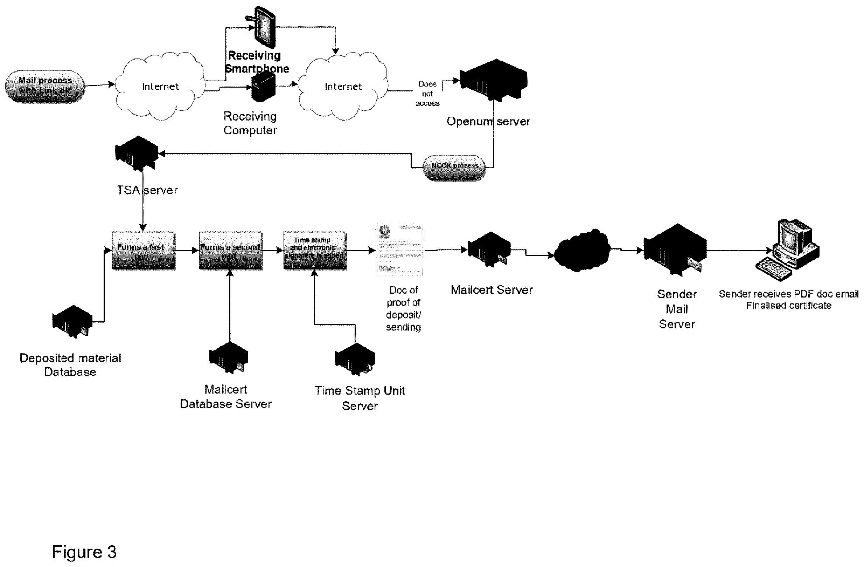

Detailed situation in Figure 3: The mail is delivered with the link, the destination user or recipient (who is not yet a receiver) may or may not access the mail and finally they do not access the link, so the content is not accessed. In this case, a TSA system, generator of time stamps as proof, will compose the file of proof first with the deposited material, with the date and time of deposit and the deposited material, and a watermark is added that indicates the confidentiality of the deposited material. Subsequently, it adds all the proof of the delivery of the certified mail and finally it is signed electronically by the telecommunications operator and a time stamp is added through a time stamp server, either internal or external to the telecommunications provider. The final result is a signed and stamped file containing all the proof and content of the actions carried out, with watermarks that indicate its confidentiality and including who, for whom, when it was deposited, when it was sent and when it could not be delivered.

This file is sent by email through the Mailcert Server that is delivered to the sender's electronic representative, which is their mail server on the network, and from there, finally to the sending user who receives the document with all the proof.

Detailed situation in Figure 4: The mail with the link is delivered, the user accesses the mail and finally accesses the link. The link indicates an incoming server that manages the users and the content to be shown to third parties at the request of the sender.

Once the link is accessed, the incoming server adds a watermark indicating the confidentiality of the content and allows or does not allow access to the content according to the conditions specified by the sender, which may be open, with a temporary OTP password (one time password) or with a digital certificate. The number of times this content can be accessed can also be specified at the sender's behest, as well as the expiration time for waiting to display the information. If the time limit has elapsed, we would go to situation B explained in Figure 3.

Once the conditions are met and the content is shown to the recipient, the TSA server will generate a file where the deposited material will first be added, with the date and time of deposit, and a watermark is added that indicates the confidentiality of the deposited material, who deposited it and when it was deposited. Then the access data of the recipient of the content, their IP address and their form of access: free, by OTP or by digital certificate, will be added to this file. Subsequently, all the proof of the delivery of the certified mail is added and finally it is signed electronically by the telecommunications operator and a time stamp is added through a time stamp server, either internal or external to the telecommunications provider.

The final result is a signed and stamped file containing all the proof and content of the actions carried out, with watermarks that indicate its confidentiality and including who, for whom, when it was deposited, when it was sent, when it was viewed and what method was used to identify the recipient.

This file is sent by email, and can be sent to the sender and to the recipient, at the sender's behest, through the Mailcert Server that is delivered to the electronic representative of the sender and of the recipient, which are their mail servers on the network, and from there, finally to the sending user and to the recipient, who receive the document with all the proof.

It should be noted that throughout this document the assumption is made that the recipient becomes a receiver, in other words, he receives data from the sender or from some element of the communications network or of the telecommunications operator, which is why in some parts of the text said user is referred to as receiver or recipient, taking into account the moment when it refers to the same.

## Claims

1. A method for automated certification of confidential information, **characterised in that** it comprises:
• sending, by a sender, an email containing information considered confidential to an incoming server of the telecommunications operator,
• applying a mark to the content of the e-mail, that mark determining the status of said content as confidential is received in the incoming server of the telecommunications operator,
• storing the email and its content in a deposit server,
• sending from an email management server with collection of proof (Mailcert Server) of the telecommunications operator an email message that comprises a link to an IP address corresponding to a confidential data server of the telecommunications operator in such a way that the recipient can access the confidential data,
• determining the moment when the recipient accesses the destination of the link,
• generating a document of proof in a proof generating server (TSA Server) of the telecommunications operator wherein said document of proof comprises transaction data referring to at least one of the following elements:
- the sender's identity,
- the recipient's identity,
- recipient authentication method,
- content of the deposited material to which a mark that identifies it as confidential can be added,
- the mail generated with the link, and
- data referring to the transmission of the mail generated with the link,
• signing the document of proof with a recognised electronic signature of the telecommunications operator, thus generating a digital certificate, and
• sending the digital certificate to at least one of: sender and recipient.

2. The method according to claim 1, wherein the mark of the content of the digital file is a visible watermark on the content of the digital file.

3. The method according to claim 1, which additionally comprises adding to the document of proof a time stamp corresponding to at least one of the following events:
- receiving a digital file on the incoming server of the telecommunications operator,
- applying to the digital file the mark that determines its status as confidential and its content as confidential data,
- sending the mail with the access link to the confidential data to the recipient,
- accessing the access link to the confidential data, and
- downloading confidential data.

4. The method according to claim 1, **characterised in that** it additionally comprises taking proof of the identity of the recipient by: identification without any type of password, with a temporary OTP password or with a specific recognised electronic certificate.

5. The method according to claim 1, **characterised in that** it additionally comprises determining a time interval during which the link is accessible.

6. The method according to claim 1, **characterised in that** it additionally comprises sending a temporary password (OTP) to the recipient to be able to access the link.
